# EUROPÄISCHE PATENTSCHRIFT

(11) **EP 0 682 746 B1**
(45) Veröffentlichungstag und Bekanntmachung des Hinweises auf die Patenterteilung: **05.08.1998**
(21) Anmeldenummer: 95900660.2
(22) Anmeldetag: 24.11.1994
(51) Int. Cl.: F02M 41/14, F02M 59/44

(54) **KRAFTSTOFFEINSPRITZPUMPE**
FUEL INJECTION PUMP
POMPE D'INJECTION DE CARBURANT

(30) Priorität: 04.12.1993 DE 4341424
(43) Veröffentlichungstag der Anmeldung: 22.11.1995
(73) Patentinhaber: ROBERT BOSCH GMBH, 70442 Stuttgart (DE)
(72) Erfinder: HELMBRECHT, Peter, D-73730 Esslingen (DE); FEHLMANN, Wolfgang, D-70563 Stuttgart (DE); SCHULTHEISS, Gerold, D-75173 Pforzheim (DE); JUNGER, Dieter, D-70374 Stuttgart (DE); KEBRICH, Bodo, D-67746 Merzweiler (DE); MOREL-FOURRIER, J., Paul, F-38540 Valencin (FR)
(86) Internationale Anmeldenummer: DE9401390
(87) Internationale Veröffentlichungsnummer: WO9515434

(56) Entgegenhaltungen:
- EP-A- 0 499 787
- WO-A-92/04539
- FR-A- 2 396 169
- FR-A- 2 442 343
- GB-A- 2 030 640

## Beschreibung

### Stand der Technik

Die Erfindung geht aus von einer Kraftstoffeinspritzpumpe der im Oberbegriff des Anspruchs 1 definierten Gattung, wie sie aus der FR-A-2 442 343 entnehmbar ist.

Bei einer bekannten Kraftstoffeinspritzpumpe dieser sog. Verteilerbauart mit Radialkolben (EP 0 244 340 B1 oder EP 0 303 237 A2) trägt die Verteilerwelle im Bereich der die Pumpenkolben aufnehmenden Radiaibohrungen einen im Durchmesser wesentlich größeren Wellenabschnitt, in dem fluchtend zu den die Radialkolben aufnehmenden Radialbohrungen radiale Einstiche eingebracht sind, in welchen die Rollenschuhe mit den darin drehbar gehaltenen Rollen oder Walzen verschieblich eingesetzt sind. Die Kupplung von Verteiler- und Antriebswelle erfolgt über an den Stirnseiten von Verteiler- und Antriebswelle vorstehenden Klauenpaaren, die spiellos ineinandergreifen.

Diese konstruktive Ausführung bedingt einen hohen fertigungstechnischen Aufwand zur Herstellung der Verteilerwelle und des Nockenbetriebs, was sich in hohen Fertigungskosten niederschlägt.

### Vorteile der Erfindung

Die erfindungsgemäße Kraftstoffeinspritzpumpe mit den kennzeichnenden Merkmalen des Anspruchs 1 hat den Vorteil, daß die Rollenschuhe mit Rollen in Axialschlitze eines hohlzylindrischen, die Verteilerwelle stirnseitig übergreifenden Kupplungskopf der Antriebswellegelagert sind, was kostengünstig gefertigt werden kann, und dabei eine drehfeste Kupplung zwischen Antriebs- und Verteilerwelle durch eine Kupplungsscheibe herbeigeführt wird, die mit am Scheibenumfang radial vorspringenden, vorzugsweise mit ihr einstückigen Kupplungsstegen in den Axialschlitzen im Kupplungskopf einliegt und in einer zentralen Ausnehmung einen an der Stirnseite der Verteilerwelle vorstehenden Zapfen formschlüssig aufnimmt.

Durch die in den weiteren Ansprüchen aufgeführten Maßnahmen sind vorteilhafte Weiterbildungen und Verbesserungen der im Anspruch 1 angegebenen Kraftstoffeinspritzpumpe möglich.

Der Formschluß zwischen den radialen Kupplungsstegen der Kupplungsscheibe und den Axialschlitzen im Kupplungskopf einerseits und zwischen der zentralen Ausnehmung der Kupplungscheibe und dem Zapfen an der Verteilerwelle andererseits ist dabei so getroffen, daß eine kardanische Verbindung zwischen Antriebs- und Verteilerwelle besteht, wodurch toleranzbedingte Versätze zwischen Antriebs- und Verteilerwelle problemlos ausgeglichen werden.

Eine solche kardanische Anlenkung der Verteilerwelle an die Antriebswelle wird bei insgesamt vier um jeweils 90° zueinander versetzt angeordneten Axialschlitzen im Kupplungskopf und entsprechend vier um 90° zueinander versetzt angeordnete radialen Kupplungsstegen an der Kupplungsscheibe gemäß einer zweckmäßigen Ausführungsform der Erfindung dadurch erzielt, daß zwei diametral zueinander angeordnete Kupplungsstege in Umfangsrichtung spiellos in den zugeordneten Axialschlitzen einliegen und die Ausnehmung in der Kupplungsscheibe zwei parallel und rechtwinklig zu den spiellos in den Axialschlitzen einliegenden Kupplungsstegen verlaufende Flanken aufweist, an denen der Zapfen an der Verteilerwelle mit parallelen voneinander abgekehrten Zapfenflächen spiellos anliegt.

Gemäß einer weiteren Ausführungsform der Erfindung liegen die zwei verbleibenden aneinander diametral gegenüberliegenden kupplungsstege der Kupplungsscheibe mit Spiel in Umfangsrichtung in den zugeordneten Axialschlitzen im Kupplungskopf ein. Das Umfangsspiel ist dabei an auftretende Toleranzen (Mittenversatz) entsprechend angepaßt.

Gemäß einer vorteilhaften Ausführungsform der Erfindung liegt die Kupplungsscheibe am Schlitzgrund der Axialschlitze auf und bildet eine axiale Begrenzungswand für die Rollenschuhe. Dadurch muß der Schlitzgrund nicht für die Anlage der Rollenschuhe besonders eben sein. so daß zur Herstellung der Axialschlitze das preisgünstigste Herstellungsverfahren eingesetzt werden kann.
Beispielsweise können diese mit einer rotierenden Trenn- oder Schleifscheibe in die Zylinderwand des Kupplungskopfes von dessen freien Stirnseite her eingeschnitten werden, wobei die Schleifscheibe vom freien Ende des
Kupplungskopfes aus zunehmend axial vorgeschoben wird. Dabei können die Axialschnitte jeweils einzeln eingeschnitten werden. Bei geradzahligen Axialschlitzen im Kupplungskopf können aber auch jeweils zwei diametrai gegenüberliegenden Axialschlitze in einem einzigen arbeitsvorgang gleichzeitig eingeschnitten werden.

Gemäß einer zweckmäßigen Ausführungsform der Erfindung übernimmt die Kupplungsscheibe die Funktion der Begrenzung des Drehmoments zur Verteilerwelle. Sie bildet eine Sollbruchstelle im Falle eines Fressers der Verteilerwelle, wozu die Kupplungsscheibe durch Material- oder Formgebungswahl so ausgebildet ist, daß bei Überschreiten des zugelassenen Drehmomentmaximums die radial vorstehenden Kupplungsstege abbrechen.

Gemäß einer bevorzugten Ausführungsform der Erfindung ist die Lagerung der Antriebswelle im Pumpengehäuse durch eine Gleitlagerbuchse nahe dem Austritt der Antriebswelle aus dem Pumpengehäuse und durch ein Kugellager zwischen Kupplungskopf und Pumpengehäuse vorgenommen, das sich sowohl radial als auch axial am Kupplungskopf abstützt. Dadurch wird eine präzise Wellenlagerung in Axial- und Radialrichtung erreicht, was insbesondere in Verbindung mit einem Sensor zur Erfassung der Drehwinkelstellung der Antriebswelle zur Vermeidung von Fehlereinflüssen im Sensorausgangssignal von größter Wichtigkeit ist. Durch den großen Lagerabstand zwischen den beiden Lagern entstehen in jedem Lager nur geringe Lagerkräfte, wodurch sich die Lebensdauer der Lager erhöht. Das Vorsehen des Axiallagers bedingt keine vergrößerte axiale Baulänge, da der Lageraußenring so angeordnet wird, daß er die für den Mitnehmerzapfen am Nockenring erforderliche Montageaussparung im Innern des Pumpengehäuses überdeckt.

In einer bevorzugten Ausführungsform der Erfindung weist der Kupplungskopf an seinem freien Stirnende einen Axialabschnitt mit reduziertem Durchmesser auf. An der am Übergang zum durchmesserreduzierten Endabschnitt sich ausbildenden Ringschulter liegt eine auf den Endabschnitt aufgesetzte Anlaufscheibe an. Der Innenring des Kugellagers stützt sich radial an dem durchmesserkleineren Endabschnitt des Kupplungskopfes und axial an der Anlaufscheibe ab und ist in Axialrichtung durch einen Sicherungsring gesichert. Durch diese konstruktive Maßnahme versteift der aufgepreßte Innenring des Kugellagers die freien Enden der zwischen den Axialschlitzen verbleibenden klauenähnlichen Wandsegmente des Kupplungskopfes. Damit wird deren Verformung in radialer Richtung, verursacht durch die Übertragung des Antriebsmomentes auf die Rollenschuhe, wesentlich begrenzt. Die Folge davon ist ein geringerer Verschleiß im Nockentrieb aufgrund kleinerer Schiefstellungen der Rollenschuhe und eine Verbesserung des Einspritzdruckverlaufs aufgrund geringerer Elastizität.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt einer Kraftstoffeinspritzpumpe der Verteilerbauart mit Radialkolben für eine Brennkraftmaschine,
- Fig. 2: einen Schnitt von Kupplungskopf und Nockenring gemäß Linie II-II in Fig. 1,
- Fig. 3: einen Schnitt gemäß Linie III-III in Fig. 1,
- Fig. 4: eine Seitenansicht einer Antriebswelle der Kraftstoffeinspritzpumpe in Fig. 1,
- Fig. 5: eine Draufsicht einer auf dem Kupplungskopf der Antriebswelle in Fig. 4 sitzenden Anlaufscheibe,
- Fig. 6: eine Draufsicht einer in dem Kupplungskopf der Antriebswelle in Fig. 4 einliegenden Kupplungsscheibe,
- Fig. 7: einen Querschnitt des Kupplungskopfes der Antriebswelle in Fig. 4 mit darin einliegender Kupplungsscheibe gemäß einem weiteren Ausführungsbeispiel.
- Fig. 8 und 9: jeweils einen Längsschnitt des Kupplungskopfes der Antriebswelle in Fig. 4 zur Verdeutlichung der Herstellung der Axialschlitze, schematisch skizziert.

### Beschreibung des Ausführungsbeispiels

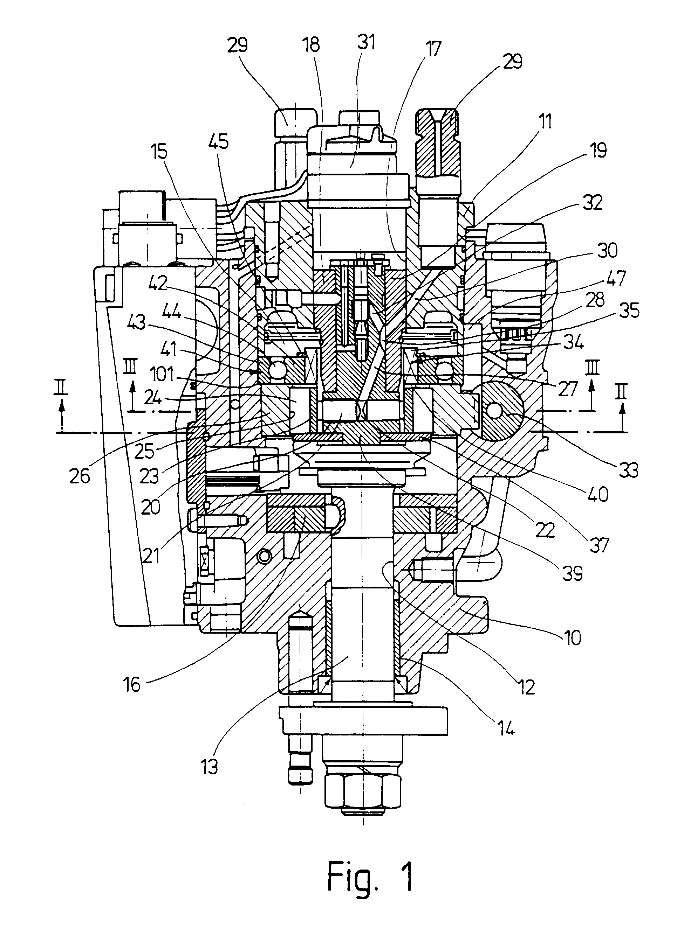

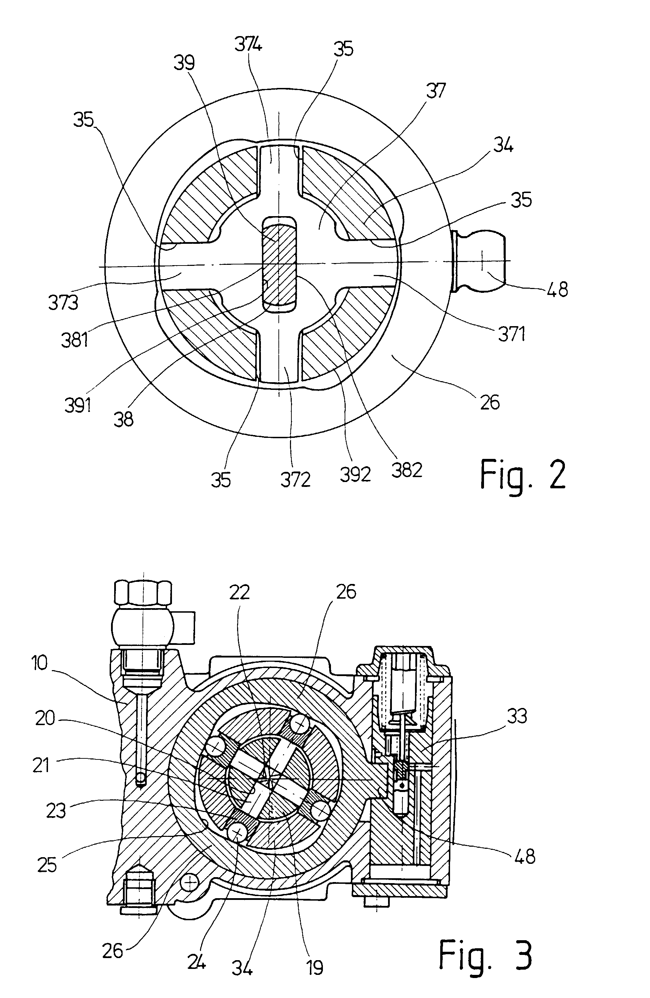

Die in Fig. 1 im Längsschnitt dargestellte Kraftstoffeinspritzpumpe der Verteilerbauart dient zur Versorgung von mehreren, hier vier, Einspritzdüsen 29 eines Dieselmotors mit unter Einspritzdruck stehendem Kraftstoff vorgegebener Zumessung. Die Kraftstoffeinspritzpumpe weist ein Pumpengehäuse 10 auf, in das von der einen Stirnseite her ein Verteilerkörper 11 eingesetzt ist und von der anderer Stirnseite her eine zentrale Bohrung 12 eingebracht ist, in welcher eine Antriebswelle 13 mittels einer in die Bohrung 12 eingesetzten Gleitlagerbuchse 14 drehbar gehalten ist. Der Verteilerkörper 11 begrenzt im Innern des Pumpengehäuses 10 einen Pumpeninnenraum 15, der mit Kraftstoff gefüllt ist, welcher von einer auf der Antriebswelle 13 drehfest sitzenden Förderpumpe 16 unter Förderdruck gehalten wird. Koaxial zur Antriebswelle 13 ist in den Verteilerkörper 11 eine weitere Bohrung 17 eingebracht, in welche eine Führungsbuchse 18 eingesetzt ist, die eine Verteilerwelle 19 drehbar aufnimmt. Die Verteilerwelle 19 ist drehfest mit der Antriebswelle 13 gekuppelt, wie im folgenden noch näher erläutert wird. Die Verteilerwelle 19 trägt vier um gleiche Umfangswinkel zueinander versetzte Radialbohrungen 20, in welchen jeweils ein Radialkolben 21 axial verschiebbar geführt ist (Fig. 1 und 3). Die vier Radialkolben 21 begrenzen mit ihrer einen Stirnseite einen zentralen Pumpenarbeitsraum 22 und liegen mit ihrer anderen Stirnseite jeweils über einen Rollenschuh 23 und einer darin drehbar gehaltenen Rolle 24 an einer Nockenbahn 25 an, die auf der Innenfläche eines die Antriebs- und Verteilerwelle 13,19 koaxial umgebenden Nockenrings 26 ausgebildet ist. Der Pumpenarbeitsraum 22 ist über eine Verteilerbohrung 27 mit einer Verteilernut 28 verbunden, die bei Rotation der Verteilerwelle 19 aufeinanderfolgend den Pumpenarbeitsraum 22 an eine zu einer der Einspritzdüsen 29 führenden Einspritzbohrung 30 anschließt. Die Beendigung des Einspritzvorgangs erfolgt durch Aufsteuerung eines Magnetventils 31, welches eine zur Verteilernut 28 führende Entlastungsbohrung 32 in der Verteilerwelle 19 mit dem Pumpeninnenraum 15 verbindet. Der Einspritzdruck wird durch die Hubbewegung der Radialkolben 21 erzeugt, die diesen bei Rotation der Verteilerwelle 19 durch die Nockenbahn 25 am Nockenring 26 aufgezwungen wird, wobei die Radialkolben 21 durch den Druck im Pumpenarbeitsraum 22 kraftschlüssig über die Rollenschuhe 23 und Rollen 24 an dieser Nockenbahn 25 anliegen. Zur Einstellung des Spritzbeginns kann in bekannter Weise der Nockenring 26 von einem Spritzversteller 33 in Umfangsrichtung in Grenzen verdreht werden, wobei die Verstellung in Abhängigkeit von dem im Pumpeninnenraum 15 herrschenden Kraftstofförderdruck erfolgt.

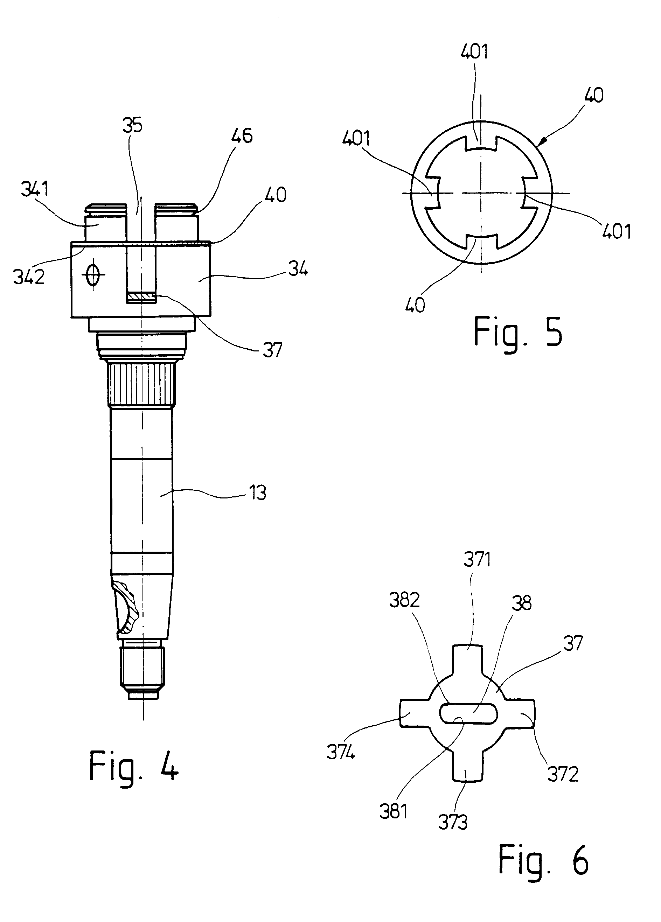

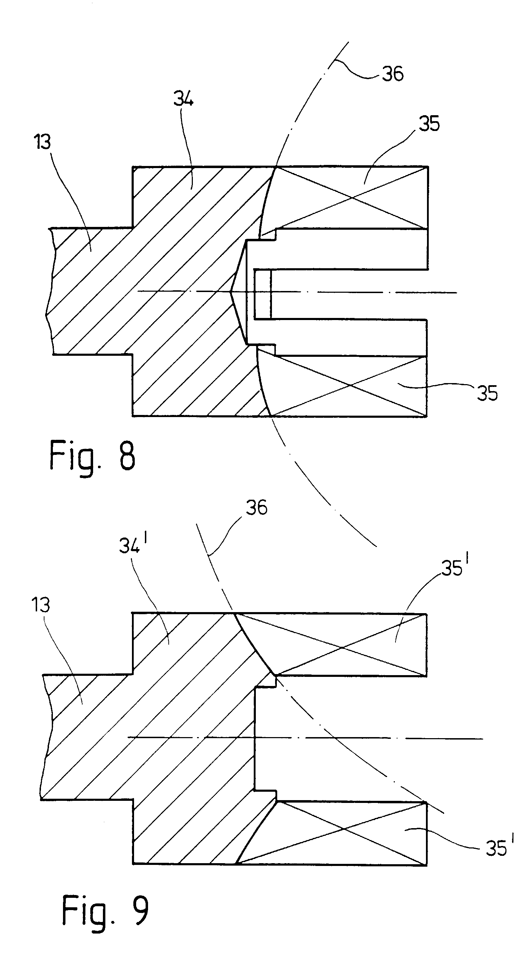

Zur Kupplung von Antriebs- und Verteilerwelle 13,19 ist an dem der Verteilerwelle 19 zugekehrten Ende der Antriebswelle 13 ein die Verteilerwelle 19 becherartig übergreifender, stutzenförmiger Kupplungskopf 34 ausgebildet (Fig. 1 und 4). In die Holzylinderwand des Kupplungskopfes 34 sind entsprechend der Zahl der Radialbohrungen 20 und Radialkolben 21 in der Verteilerwelle 19 vier Axialschlitze 35 (vgl. auch Fig. 2) eingebracht, die am freien Stirnende des Kupplungskopfes 34 frei auslaufen. Die Axialschlitze 35 sind um gleiche Umfangswinkel wie die Radialbohrungen 20 zueinander versetzt angeordnet, also hier um 90°, und die Zuordnung von Kupplungskopf 34 und Verteilerwelle 19 ist so getroffen, daß die Radialbohrungen 20 in der Verteilerwelle 19 mit den Axialschlitzen 35 im Kupplungskopf 34 radial fluchten. Wie in Fig. 8 schematisch skizziert ist, werden die Axialschlitze 35 in technisch sehr einfacher Weise durch eine Trenn- oder Schleifscheibe hergestellt, die am freien Stirnende des Kupplungskopfes 34 angesetzt und zunehmend axial vorgeschoben wird. Der Scheibenumfang der Schleifscheibe ist in Fig. 8 mit 36 angedeutet. Zur Herstellung der insgesamt vier um jeweils 90° versetzten Axialschlitze 35 sind zwei Arbeitsvorgänge erforderlich, wobei bei jedem Arbeitsvorgang zwei diametral gegenüberliegende Axialschlitze 35 hergestellt werden. Der Schlitzgrund der Axialschlitze 35 ist kreisbogenförmig.

Am Grund der Axialschlitze 35 liegt eine Kupplungsscheibe 37 (Fig. 1, 2, 4 und 6) mit vier am Scheibenumfang radial vorspringenden, mit der Kupplungsscheibe 37 einstückigen Kupplungsstegen 371 - 374 ein, die um gleiche Umfangswinkel von 90° zueinander versetzt angeordnet sind. Wie in Fig. 2 verdeutlicht ist, liegen dabei zwei diametrale Kupplungsstege 371 und 373 in Umfangsrichtung spiellos in den zugeordneten Axialschlitzen 35 ein, während die beiden anderen Kupplungsstege 372 und 374 mit dem für die auftretenden Toleranzen im Mittenversatz zwischen Antriebs- und Verteilerwelle 13,19 erforderlichen Spiel versehen sind, bei gleich breiten Axialschlitzen 35, also schmaler ausgebildet sind als die Kupplungsstege 371,373. Mittig trägt die Kupplungsscheibe 37 eine zentrale Ausnehmung 38, die einen Stirnzapfen 39 formschlüsig aufnimmt, der an der Stirnseite der Verteilerwelle 19 koaxial vorspringt (Fig. 1 und 2). Die Ausnehmung 38 ist dabei rechteckförmig bemessen, wobei die beiden parallelen Längsseiten 381,382 rechtwinklig zu denjenigen kupplungsstegen 371,373 verlaufen, die in ihren zugeordneten Axialschlitzen 35 spiellos einliegen. An diesen Längsseiten 381,382 liegt der Stirnzapfen 39 der Verteilerwelle 19 mit parallelen, voneinander wegweisenden Zapfenflächen 391,392 spiellos an. Durch diese Ausbildung der Kupplungsstege 371,373 und der Ausnehmung 38 wird eine kardanische Anlenkung der Verteilerwelle 19 an die Antriebswelle 13 erzielt, welche einen toleranzbedingten Mittenversatz von Antriebswelle 13 und Verteilerwelle 19 kompensiert.

Die Kupplungsscheibe 37 hat neben der Funktion der drehfesten Verbindung von Antriebswelle 13 und Verteilerwelle 19 noch die Funktion einer Drehmomentbegrenzung. Hierzu ist die Kupplungsscheibe 37 so ausgebildet, daß bei Überschreiten eines vorgegebenen Drehmomentmaximums die radial vorstehenden Kupplungsstege 371 - 374 abbrechen. Damit führt ein Kolbenfresser in der Verteilerwelle 19 zum Bruch der Kupplungsscheibe 37 und damit zur Entkopplung von Antriebs- und Verteilerwelle 13,19, so daß weitergehende Zerstörungen in der Kraftstoffeinspritzpumpe verhindert werden.

Nach Einlegen der Kupplungsscheibe 37 in den Kupplungskopf 34 werden die Rollenschuhe 23 mit darin drehbar gelagerten Rollen 24 in die Axialschlitze 35 eingelegt. Die Kupplungsstege 371 - 374 der Kupplungsscheibe 37 begrenzen damit die Führung der Rollenschuhe 23 in den Axialschlitzen 35 in axialer Richtung. Auf der axial gegenüberliegenden Seite ist die Führung der Rollenschuhe 23 durch eine Anlaufscheibe 40 (Fig. 1,4 und 5) begrenzt, die auf den Kupplungskopf 34 aufgesetzt ist. Der Kupplungskopf 34 weist an seinem freien Stirnende einen Axialabschnitt 341 mit reduziertem Durchmesser auf. Auf diesen Axialabschnitt 341 ist die Anlaufscheibe 40 aufgeschoben, die sich an eine am Übergang zum durchmesserreduzierten Axialabschnitt 341 sich ausbildenden Ringschulter 342 des Kupplungskopfes 34 anlegt und mit vier um 90° Umfangswinkel zueinander versetzten Lappen 401 in die Axialschlitze 35 eingreift. Die Lappen 401 der Anlaufscheibe 40 begrenzen damit zusammen mit den Kupplungsstegen 371 - 374 der Kupplungsscheibe 37 die Axialbewegung der Rollenschuhe 23 in den von den Axialschlitzen 35 gebildeten Führungsschlitzen der Rollenschuhe 23.

Zur verbesserten Lagerung der Antriebswelle 13 im Pumpengehäuse 10, mit welcher auch axiale Kraftkomponenten an der Antriebswelle 13 aufgenommen werden können, ist ein Kugellager 41 mit innerem Lagerring 42 und äußerem Lagerring 43 und dazwischen sich abrollenden Kugeln 44 vorgesehen. Der innere Lagerring 42 ist auf den im Durchmesser reduzierten Axialabschnitt 341 radial gegen die Anlaufscheibe 40 aufgepreßt und mit einem Sicherungsring 45, der in eine Ringnut 46 im Axialabschnitt 341 eingreift, gesichert. Der äußere Lagerring 43 des Kugellagers 41 ist mit Spielanpassung im Pumpengehäuse 10 aufgenommen und axial mit dem Verteilerkörper 11 gegen eine Gehäuseschulter 101 verspannt. Der äußere Lagerring 43 überdeckt dabei zusammen mit dem Verteilerkörper 11 eine axiale Montageaussparung 47 im Innern des Pumpengehäuses 10. Diese Montageaussparung 47 ist für die Montage des einteiligen Nockenrings 26 erforderlich, der mit einem radial abstehenden Mitnehmerzapfen 48 an dem Spritzversteller 33 angekoppelt ist.

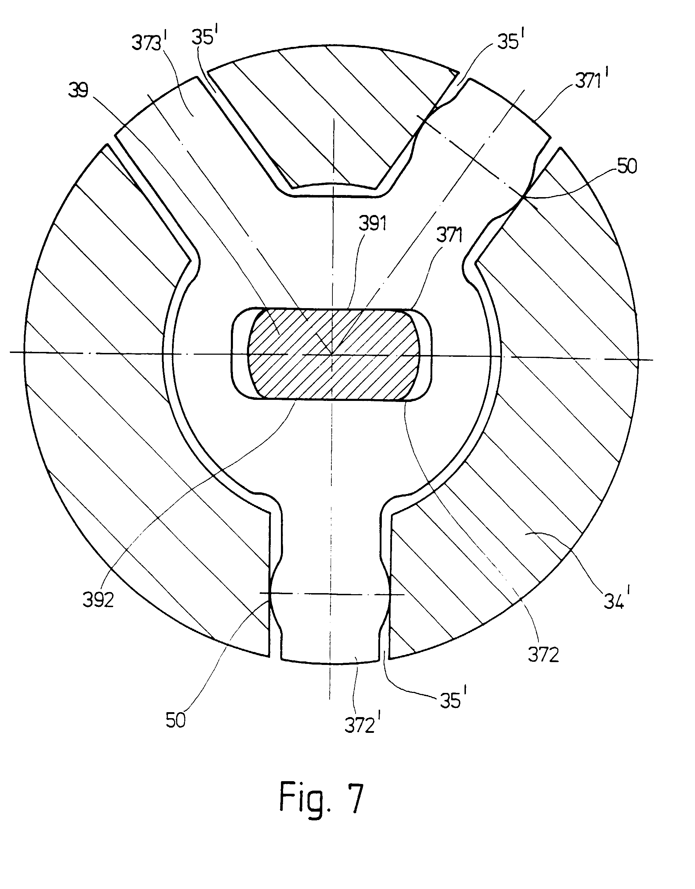

Die Ausbildung des Kupplungskopfes 34 an der Antriebswelle 13 zur Ankopplung der Verteilerwelle 19 ist nicht auf die Ausbildung von einer geradzahligen Anzahl von Axialschlitzen 35, im vorliegenden Beispiel vier, beschränkt. So kann bei einer ungeradzahligen Zahl von Radialbohrungen 20 und darin einliegenden Radialkolben 21 in der Verteilerwelle 19 auch eine ungeradzahlige Zahl von Axialschlitzen 35 im Kupplungskopf 34' vorgesehen werden, wobei wiederum jeder Axialschlitz 35' den dem Radialkolben 21 zugeordneten Follenschuh 23 mit darin drehbar gelagerter Rolle 24 in Radialrichtung verschiebbar aufnimmt. In Fig. 7 ist ein Querschnitt eines solchen Kupplungskopfes 34' mit drei Axialschlitzen 35' dargestellt, in welche wiederum eine Kupplungsscheibe 37' mit entsprechend drei Kupplungsstegen 371',372' und 373' hineinragt. Entsprechend der Anordnung der Axialschlitze 35' hat der Kupplungssteg 372' von dem Kupplungssteg 371' und dem Kupplungssteg 373' einen in Umfangswinkel gemessenen größeren Abstand als die beiden Kupplungsstege 371' und 373' voneinander. Die Kupplungsstege 371' und 372' weisen im Gegensatz zu dem Kupplungssteg 373' eine ballige Verbreiterung 50 auf, mit welcher sie in Umfangsrichtung spiellos in dem zugeordneten Axialschlitz 35' einliegen. Der Kupplungssteg 373' besitzt hingegen in Umfangsrichtung Spiel innerhalb des zugeordneten Axialschlitzes 35'. Die wiederum rechteckförmig ausgebildete Ausnehmung 38 ist so ausgerichtet, daß ihre beiden Längsseiten 381 und 382 sich rechtwinklig zu dem mittleren Kupplungssteg 372' erstrecken, der von den beiden anderen Kupplungsstegen 371' und 373' den größten Abstand aufweist. Diese konstruktive Gestaltung für eine ungeradzahlige Anzahl von Axialschlitzen 35' im Kupplungskopf 34' stellt ebenso eine kardanische Anlenkung der Verteilerwelle 19 an der Antriebswelle 13 sicher. Die fertigungstechnisch einfache Herstellung der ungeraden Zahl von Axialschlitzen 35' in dem hohlzylindrischen Kupplungskopf 34' ist in Fig. 9 skizziert. Jeder Axialschlitz 35' wird einzeln durch axiales Ansetzen einer Trenn- oder Schleifscheibe am freien Ende des Kupplungskopfes 34' in dessen Hohlzylinderwand eingeschnitten. Der Scheibenumfang der Trennscheibe ist in Fig. 9 strichpunktiert angedeutet und mit 36 bezeichnet.

## Patentansprüche

1. Kraftstoffeinspritzpumpe der Verteilerbauart zur Versorgung einer Mehrzahl von Einspritzdüsen (29) von Brennkraftmaschinen, mit einer in einem Pumpengehäuse (10) gelagerten, rotierenden Antriebswelle (13), mit einer mit der Antriebswelle (13) drehfest gekuppelten Verteilerwelle (19), die bei Drehung sukzessive eine Verbindung zwischen einem in ihr integrierten Pumpenarbeitsraum (22) und einer der Einspritzdüsen (29) herstellt, mit in jeweils einer Radialbohrung (20) der Verteilerwelle (19) axial verschieblich einliegenden Pumpenkolben (21), die mit ihrer einen Stirnseite den Pumpenarbeitsraum (22) begrenzen und mit ihrer anderen Stirnseite über in Rollenschuhen (23) drehbeweglich gehaltenen Rollen (24) an einer Nockenbahn (25) eines zur Verteilerwelle (19) koaxialen, im Pumpengehäuse (10) festgelegten Nockenrings (26) kraftschlüssig anliegen, und an dem der Verteilerwelle (19) zugekehrten Ende der Antriebswelle (13) ein die Verteilerwelle (19) becherartig übergreifender, stutzenförmiger Kupplungskopf (34) ausgebildet ist, daß in der Hohlzylinderwand des Kupplungskopfes (34) eine der Zahl der Radialbohrungen (20) in der Verteilerwelle (19) entsprechende Zahl von am freien Stirnende des Kupplungskopfes (34) frei auslaufenden Axialschlitzen (35) so eingebracht ist, daß die Axialschlitze (35) mit den Radialbohrungen (20) in der Verteilerwelle (11) radial fluchten, und daß die Rollenschuhe (23) mit Rollen (24) in den Axialschlitzen (35) radial verschieblich einliegen und die drehfeste Kupplung zwischen Antriebs- und Verteilerwelle (13, 19) durch eine Kupplungsscheibe (37; 37') erfolgt, die mit am Scheibenumfang radial vorspringenden, vorzugsweise mit der Kupplungsscheibe (37; 37') einstückigen Kupplungsstegen (371-374; 371'-373') in den Axialschlitzen (35; 35') im Kupplungskopf (34; 34') einliegt, dadurch gekennzeichnet, daß die Kupplungsscheibe eine zentrale Ausnehmung (38) aufweist mit zwei zueinander parallel verlaufenden Flanken (381, 382), die einen an der Stirnseite der Verteilerwelle (19) vorstehenden mit zwei zueinander parallelen Zapfenflächen (391, 392) versehenen Zapfen (39) formschlüssig aufnimmt.

2. Einspritzpumpe nach Anspruch 1, dadurch gekennzeichnet, daß der Formschluß zwischen den radialen Kupplungsstegen (371-374;371'-373') der Kupplungsscheibe (37;37') und den Axialschlitzen (35;35') im Kupplungskopf (34;34') einerseits und zwischen der zentralen Ausnehmung (38) in der Kupplungsscheibe (37;37') und dem Stirnzapfen (39) an der Verteilerwelle (19) andererseits so getroffen ist, daß eine kardanischer Anlenkung von Antriebswelle (11) und Verteilerwelle (19) besteht.

3. Einspritzpumpe nach Anspruch 2, dadurch gekennzeichnet, daß insgesamt vier um jeweils 90° zueinander versetzt angeordnete Axialschlitze (35) im Kupplungskopf (34) angeordnet sind, daß die Kupplungsscheibe (37) vier um 90° zueinander versetzt angeordnete radiale Kupplungsstege (371,374) aufweist, von denen zwei diametral zueinander angeordnete Kupplungsstege (371-373) spiellos in den Axialschlitzen (35) einliegen, und daß die Ausnehmung (38) in der Kupplungsscheibe (37) zwei parallel und rechtwinklig zu den spiellos in den Axialschlitzen (35) einliegenden Kupplungsstege (371,373) verlaufende Flanken (381,383) aufweist, an denen der Stirnzapfen (39) der Verteilerwelle (19) mit voneinander und wegweisenden parallelen Zapfenflächen (391,392) anliegt.

4. Einspritzpumpe nach Anspruch 3, dadurch gekennzeichnet, daß die zwei verbleibenden einander diametral gegenüberliegenden Kupplungsstege (372,374) der Kupplungsscheibe (37) mit Spiel in Umfangsrichtung in den zugeordneten Axialschlitzen (35) im Kupplungskopf (34) einliegen.

5. Einspritzpumpe nach Anspruch 2, dadurch gekennzeichnet, daß insgesamt drei Axialschlitze (35') im Kupplungskopf (34') der Verteilerwelle (19) und entsprechend drei Kupplungsstege (371'-373') an der Kupplungsscheibe (37') vorgesehen sind, von denen die um den größeren Umfangswinkel zueinander versetzten Kupplungsstege (371',372') durch eine ballige Verbreiterung (50) ihre Stegbreite in Umfangsrichtung spiellos in den zugeordneten Axialschlitzen (35') einliegen, und daß die Ausnehmung (38) in der Kupplungsscheibe (37') zwei parallel und rechtwinklig zu dem am weitesten von den beiden anderen Kupplungsstegen (371',373') entfernt liegenden Kupplungsteg (372') sich erstreckende Flanken (381,382) aufweist, an denen der Stirnzapfen (39) der Verteilerwelle (19) mit voneinander wegweisenden parallelen Zapfenflächen (391,392) spiellos anliegt.

6. Einspritzpumpe nach einem der Ansprüche 1 - 5, dadurch gekennzeichnet, daß die Kupplungsscheibe (37) am Schlitzgrund der Axialschlitze (35) aufliegt und daß die Rollenschuhe (23) axial an der Kupplungsscheibe (37) anliegen.

7. Einspritzpumpe nach einem der Ansprüche 1 - 5, dadurch gekennzeichnet, daß die Kupplungsscheibe (37) zur Übertragung eines maximalen Drehmoments derart ausgebildet ist, daß bei Überschreiten des Drehmomentmaximums die radial vorstehenden Kupplungsstege (371-374) abbrechen.

8. Einspritzpumpe nach einem der Ansprüche 1 - 7, dadurch gekennzeichnet, daß die Axialschlitze (35;35') mittels einer rotierenden Schleifscheibe in die Zylinderwand des Kupplungskopfes (34;34') eingeschnitten werden, indem die Schleifscheibe vom freien Ende des Kupplungskopfes (34;34') her axial vorgeschoben wird.

9. Einspritzpumpe nach einem der Ansprüche 1 - 8, dadurch gekennzeichnet, daß die Lagerung der Antriebswelle (13) im Pumpengehäuse (10) durch eine Gleitlagerbuchse (14) nahe dem Austritt der Antriebswelle (13) aus dem Pumpengehäuse (10) und durch ein Kugellager (41) zwischen Kupplungskopf (34) und Pumpengehäuse (10) vorgenommen ist, das sich radial und axial am Kupplungskopf (34) abstützt.

10. Einspritzpumpe nach Anspruch 9, dadurch gekennzeichnet, daß der Kupplungskopf (34) an seinem freien Stirnende einen Axialabschnitt (341) mit reduziertem Durchmesser aufweist, daß an der am Übergang zum durchmesserreduzierten Axialabschnitt sich ausbildenden Ringschulter (342) eine Anlaufscheibe (40) anliegt und daß der innere Lagerring (42) des Kugellagers (41) an dem durchmesserreduzierten Axialabschnitt (341) des Kupplungskopfes (34) und axial an der Anlaufscheibe (40) anliegt.

11. Einspritzpumpe nach Anspruch 9 oder 10, dadurch gekennzeichnet, daß der innere Lagerring (42) des Kugellagers (41) gegen die Anlaufscheibe (40) auf den durchmesserreduzierten Axialabschnitt (341) des Kupplungskopfes (34) aufgepreßt und mit einem in einer Ringnut (46) im Axialabschnitt (341) eingesetzten Sicherungsring (45) gesichert ist.

12. Einspritzpumpe nach einem der Ansprüche 9 - 10, dadurch gekennzeichnet, daß der äußere Lagerring (43) des Kugellagers (41) sich in Axialrichtung an einer Gehäuseschulter (101) im Pumpengehäuse (10) abstützt und durch einen in das Pumpengehäuse (10) stirnseitig eingesetzten, die Verteilerwelle (19) aufnehmenden Verteilerkörper (11) an der Gehäuseschulter (101) festgespannt ist.

## Claims

1. Fuel-injection pump of the distributor type for supplying a plurality of injection nozzles (29) of internal-combustion engines, with a rotating drive shaft (13) mounted in a pump casing (10), with a distributor shaft (19) which is coupled fixedly in terms of rotation to the drive shaft (13) and which, during rotation, successively makes a connection between a pump working space (22) integrated in it and one of the injection nozzles (29), and with pump pistons (21) which are each seated axially displaceably in a radial bore (20) of the distributor shaft (19) and which by means of one end face limit the pump working space (22) and by means of their other end face, via rollers (24) held rotationally movably in roller shoes (23), bear non-positively on a cam track (25) of a cam ring (26) coaxial relative to the distributor shaft (19) and fixed in the pump casing (10), and a stub-like coupling head (34) engaging over the distributor shaft (19) in a cup-like manner is formed at the end of the drive shaft (13) facing the distributor shaft (19), in that in the hollow-cylindrical wall of the coupling head (34) a number, corresponding to the number of radial bores (20) in the distributor shaft (19), of axial slots (35) terminating freely on the free end face of the coupling head (34) are made in such a way that the axial slots (35) are radially aligned with the radial bores (20) in the distributor shaft (19), and in that the roller shoes (23) with rollers (24) are seated radially displaceably in the axial slots (35), and the rotationally fixed coupling between the drive shaft (13) and distributor shaft (19) takes place by means of a coupling disc (37; 37') which is seated in the axial slots (35; 35') in the coupling head (34; 34') by means of coupling webs (371-374; 371'-373') projecting radially on the disc circumference and preferably in one piece with the coupling disc (37; 37') characterized in that the coupling disc has a central recess (38) with two flanks (381, 382) which extend parallel to one another, which recess positively receives a spigot (39) which projects on the end face of the distributor shaft (19) and, is provided with two mutually parallel spigot surfaces (391, 392).

2. Injection pump according to Claim 1, characterized in that the positive connection between the radial coupling webs (371-374; 371'-373') of the coupling disc (37; 37') and the axial slots (35; 35') in the coupling head (34; 34'), on the one hand, and between the central recess (38) in the coupling disc (37; 37') and the end spigot (39) of the distributor shaft (19), on the other hand, is such that there is a cardanic articulation of the drive shaft (11) and distributor shaft (19).

3. Injection pump according to Claim 2, characterized in that altogether four axial slots (35) arranged offset in each case at 90° to one another are arranged in the coupling head (34), in that the coupling disc (37) has four radial coupling webs (371, 374) which are arranged offset at 90° to one another and of which two coupling webs (371-373) arranged diametrically to one another are seated without play in the axial slots (35), and in that the recess (38) in the coupling disc (37) has two flanks (381, 383) which extend parallel and at right angles to the coupling webs (371, 373) seated without play in the axial slots (35) and on which the end spigot (39) of the distributor shaft (19) bears by means of parallel spigot surfaces (391, 392) pointing away from one another.

4. Injection pump according to Claim 3, characterized in that the two remaining coupling webs (372, 374) of the coupling disc (37) which are located diametrically opposite one another are seated with play in the circumferential direction in the associated axial slots (35) in the coupling head (34).

5. Injection pump according to Claim 2, characterized in that altogether three axial slots (35') are provided in the coupling head (34') of the distributor shaft (19) and correspondingly three coupling webs (371'-373') are provided on the coupling disc (37'), of which the coupling webs (371', 372') offset at the larger circumferential angle to one another are seated, as result of a convex widening (50) of their web width, in the associated axial slots (35') without play in the circumferential direction, and in that the recess (38) in the coupling disc (37') has two flanks (381, 382) which extend at right angles to the coupling web (372') located furthest from the other two coupling webs (371', 373') and on which the end spigot (39) of the distributor shaft (19) bears without play by means of parallel spigot surfaces (391, 392) pointing away from one another.

6. Injection pump according to one of Claims 1 - 5, characterized in that the coupling disc (37) rests on the slot bottom of the axial slots (35), and in that the roller shoes (23) bear axially on the coupling disc (37).

7. Injection pump according to one of Claims 1 - 5, characterized in that the coupling disc (37) is designed, for the transmission of a maximum torque, in such a way that the radially projecting coupling webs (371-374) break off when the torque maximum is exceeded.

8. Injection pump according to one of Claims 1 - 7, characterized in that the axial slots (35; 35') are cut into the cylindrical wall of the coupling head (34; 34') by means of a rotating grinding wheel, in that the grinding wheel is advanced axially from the free end of the coupling head (34; 34').

9. Injection pump according to one of Claims 1 - 8, characterized in that the mounting of the drive shaft (13) in the pump casing (10) is effected by a plain bearing bush (14) near the exit of the drive shaft (13) from the pump casing (10) and by a ball bearing (41) between the coupling head (34) and pump casing (10) which is supported radially and axially on the coupling head (34).

10. Injection pump according to Claim 9 characterized in that the coupling head (34) has an axial portion (341) of reduced diameter on its free end face, in that a thrust washer (40) bears on the annular shoulder (342) forming at the transition to the axial portion of reduced diameter, and in that the inner bearing ring (42) of the ball bearing (41) bears on the axial portion (341) of reduced diameter of the coupling head (34) and axially on the thrust washer (40).

11. Injection pump according to Claim 9 or 10, characterized in that the inner bearing ring (42) of the ball bearing (41) is pressed against the thrust washer (40) onto the axial portion (341) of reduced diameter of the coupling head (34) and is retained by means of a retaining ring (45) inserted in an annular groove (46) in the axial portion (341).

12. Injection pump according to one of Claims 9 - 10, characterized in that the outer bearing ring (43) of the ball bearing (41) is supported in the axial direction on a casing shoulder (101) in the pump casing (10) and is clamped against the casing shoulder (101) by a distributor body (11) inserted into the pump casing (10) on the end face and receiving the distributor shaft (19).

## Revendications

1. Pompe d'injection de carburant du type distributeur, pour alimenter plusieurs injecteurs (29) d'un moteur à combustion interne comprenant :
- un arbre d'entraînement (13) monté à rotation dans le corps de pompe (10),
- un arbre distributeur (19) couplé solidairement en rotation à l'arbre d'entraînement (13), et qui, au cours de la rotation, réalise successivement la liaison entre une chambre active de pompe (22) intégrée dans celle-ci et l'un des injecteurs (29),
- chaque perçage radial (20) de l'arbre distributeur (19), reçoit des pistons de pompe (21) coulissant axialement, et délimitant par l'une de leurs faces frontales, la chambre active (22) de la pompe et ces pistons sont appliqués par la force, par l'autre extrémité frontale, par des galets (24) maintenus libres en rotation dans des patins à galets (23) contre un chemin de cames (25) d'une bague à cames (26) fixée dans le corps de pompe (10), coaxialement à l'arbre distributeur (19), alors que l'extrémité de l'arbre d'entraînement (13) tournée vers l'arbre distributeur (19) comporte une tête de couplage (34) en forme de prolongement, en gobelet, venant pardessus l'arbre distributeur (19),
- la paroi cylindrique creuse de la tête de couplage (34) ayant un nombre de fentes axiales (35) débouchant librement à la face frontale libre de la tête de couplage (34), ce nombre correspondant au nombre de perçages radiaux (20) de l'arbre distributeur (19),
- les fentes axiales (35) sont alignées radialement avec les perçages radiaux (20) de l'arbre de distributeur (19), et
- les patins à galets (23) munis des galets (24) sont logés coulissant radialement dans les fentes axiales (35) et le couplage solidaire en rotation entre l'axe d'entraînement (13) et l'arbre distributeur (19) se fait par un disque de couplage (37, 37') appliqué par des branches de couplage (371-374 ; 371'-373'), venant radialement en saillie de la périphérie du disque et faisant de préférence corps avec le disque de couplage (37, 37'), dans les fentes axiales (35, 35') de la tête de couplage (34, 34'),
caractérisée en ce que
le disque de couplage comporte une découpe centrale (38) avec deux flancs (381, 382) parallèles, recevant par une liaison par la forme un téton (39) en saillie de la face frontale de l'arbre distributeur (19) et ayant deux surfaces de téton (391, 392) parallèles.

2. Pompe d'injection selon la revendication 1,
caractérisée en ce que
la liaison par la forme d'une part entre les branches de couplage, radiales (371-374 ; 371', 373') du disque de couplage (37, 37') et les fentes axiales (35, 35') de la tête de couplage (34, 34') et d'autre part, entre la cavité centrale (38) du disque de couplage (37, 37') et le téton frontal (39) de l'arbre distributeur (19) sont réalisées pour former une articulation de cardan entre l'arbre d'entraînement (11) et l'arbre distributeur (19).

3. Pompe d'injection selon la revendication 2,
caractérisée par
- en tout quatre fentes axiales (35) décalées chaque fois de 90° dans la tête de couplage (34),
- le disque de couplage (37) comporte quatre branches de couplage (371-374), radiales, décalées, parmi lesquelles, deux branches de couplage (371, 373) diamétralement opposées sont logées sans jeu dans les fentes axiales (35) et,
- la découpe (38) du disque de couplage (37) comporte deux flancs (381, 383) parallèles, perpendiculaires aux branches de couplage (371, 373) logées dans les fentes axiales (35), et contre lesquelles s'applique le téton frontal (39) de l'arbre distributeur (19) avec des surfaces de téton (391, 392), parallèles, opposées.

4. Pompe d'injection selon la revendication 3,
caractérisée en ce que
les deux autres branches de couplage (372, 374) diamétralement opposées, du disque de couplage (37) viennent avec du jeu dans la direction périphérique dans les fentes axiales (35) associées dans la tête de couplage (34).

5. Pompe d'injection selon la revendication 2,
caractérisée par
- en tout trois fentes axiales (35') réalisées dans la tête de couplage (34') de l'arbre distributeur (19) et de façon correspondante trois branches de couplage (371'-373') sur le disque de couplage (37'), dont les branches de couplage (371', 372') décalées du plus grand angle périphérique, s'appliquent par un élargissement (50) bombé de la largeur de la branche dans la direction périphérique, sans jeu dans les fentes axiales (35') associées et
- la découpe (38) du disque de couplage (37') comporte deux flancs (381, 382) parallèles et perpendiculaires à la branche de couplage (372') la plus éloignée des deux autres branches de couplage (371', 373'), contre lesquelles s'appliquent sans jeu les surfaces parallèles, opposées (391, 392) du téton (39) de la face frontale de l'arbre distributeur (19).

6. Pompe d'injection selon l'une des revendications 1 à 5,
caractérisée en ce que
le disque de couplage (37) s'applique contre le fond des fentes axiales (35) et les patins à galets (23) s'appliquent contre le disque de couplage (37).

7. Pompe d'injection selon l'une quelconque des revendications 1 à 5,
caractérisée en ce que
le disque de couplage (37) est réalisé pour transmettre un couple maximum de façon que les branches de couplage (371-374), radialement en saillie se cassent en cas de dépassement du couple maximum,

8. Pompe d'injection selon l'une quelconque des revendications 1 à 7,
caractérisée en ce que
les fentes axiales (35, 35') sont coupées avec un disque de tronçonnage rotatif dans la paroi cylindrique de la tête de couplage (34, 34'), en faisant pénétrer axialement, le disque de tronçonnage partant de l'extrémité libre de la tête de couplage (34, 34').

9. Pompe d'injection selon l'une quelconque des revendications 1 à 8,
caractérisée en ce que
le montage de l'arbre d'entraînement (13) dans le corps (10) de la pompe est assuré par un palier glissant (14) à proximité de la sortie de l'arbre d'entraînement (13) du corps (10) de la pompe et par un palier à billes (41) entre la tête de couplage (34) et le corps de pompe (10), qui s'appuie radialement et axialement contre la tête de couplage (34).

10. Pompe d'injection selon la revendication 9,
caractérisée en ce que
- la tête de couplage (34) comporte à son extrémité frontale libre, un segment axial (341) de diamètre réduit,
- l'épaulement annulaire (342) formé à la jonction avec le segment axial de diamètre réduit, une rondelle d'attaque ou avancement (40) et,
- la cage (42) intérieure du palier à billes (41) s'appuie contre le segment axial (341) de diamètre réduit de la tête de couplage (34) et axialement contre la rondelle d'attaque ou avancement (40).

11. Pompe d'injection selon la revendication 9 ou 10,
caractérisée en ce que
la cage intérieure (42) du palier à billes (41) est emmanchée de force contre la rondelle d'attaque ou avancement (40) sur le segment axial de diamètre réduit (341) de la tête de couplage (34) et elle est fixée par un anneau de fixation (45) logé dans une rainure annulaire (46) du segment axial (341).

12. Pompe d'injection selon l'une quelconque des revendications 9 et 10,
caractérisée en ce que
la cage extérieure (43) du palier à billes (41) s'appuie dans la direction axiale contre un épaulement (101) du corps (10) de la pompe et est serrée contre cet épaulement (101) par un corps distributeur (11), logé dans le corps de pompe (10) en partant de sa face frontale et qui reçoit l'arbre distributeur (19).
